# EUROPÄISCHE PATENTSCHRIFT

(11) **EP 0 741 205 B1**
(45) Veröffentlichungstag und Bekanntmachung des Hinweises auf die Patenterteilung: **22.03.2000**
(21) Anmeldenummer: 96105886.4
(22) Anmeldetag: 15.04.1996
(51) Int. Cl.: E02B 7/44, E02B 3/10

(54) **Hochwasserschutzsystem mit einem oder mehreren versenkbaren Wandelementen**
High water protection system having one or more lowerable wall elements
Système de protection contre les crues avec un ou plusieurs éléments muraux abaissables

(30) Priorität: 15.04.1995 DE 19514205
(43) Veröffentlichungstag der Anmeldung: 06.11.1996
(73) Patentinhaber: Trainer, Karl-Hermann, 57290 Neunkirchen (DE)
(72) Erfinder: Trainer, Karl-Hermann, 57290 Neunkirchen (DE)
(74) Vertreter: Thiel, Christian, Dr. Dipl.-Chem.

(56) Entgegenhaltungen:
- DE-A- 3 401 010
- FR-A- 829 558

## Beschreibung

Die Erfindung betrifft ein Hochwasserschutzsystem mit einem oder mehreren versenkbaren Wandelementen. Ein solches Hochwasserschutzsystem besteht insbesondere aus einer Reihe nebeneinander angeordneter Wandelemente, die im Ruhezustand in eine kanalartige Struktur eingeschwenkt sind und sich im Bedarfsfall bei Flutung dieser kanalartigen Struktur, etwa im Falle eines Hochwassers, selbsttätig aufrichten (ein derartiges, sich jedoch nicht selbsttätig aufrichtendes System ist z.B. aus der DE-A-3 401 010 bekannt).

Das erfindungsgemäße Hochwasserschutzsystem ist vielfältig zum Schutz von beispielsweise Ortschaften und Verkehrsflächen gegen anstehendes Hochwasser im Bereich von Flußläufen oder Küsten einsetzbar. Es ist insbesondere an solchen Orten einsetzbar, an denen es darauf ankommt, eine permanente Trennung des zu schützenden Ortes von dem angrenzenden Gewässer zu vermeiden, eine solche Trennung aber schnell und effizient im Falle eines Hochwassers herbeizuführen.

Der Hochwasserschutz ist in hochwassergefährdeten Städten an größeren Flüssen, Seen und Küsten ein seit langem bestehendes Gebot und Problem. Zum einen gilt es, die Bevölkerung und auch öffentliche Einrichtungen vor den Auswirkungen gelegentlich oder periodisch auftretender Hochwässer zu schützen. Zum anderen sind aber Hochwasserschutzmaßnahmen, die den Zugang zum Gewässer versperren oder erschweren, häufig aus politischen oder wirtschaftlichen Gründen nicht durchsetzbar. Insbesondere in innerstädtischen Bereichen einer Reihe von größeren Städten können deshalb keine festen Deiche oder Wände errichtet werden. In vielen Fällen erschweren auch entlang von Flußläufen verlaufende Versorgungsleitungen und Verkehrswege die Verbesserung bestehender oder den Aufbau neuer Hochwasserschutzsysteme. Andererseits haben die in jüngster Zeit zu höheren Scheitelpunkten auflaufenden Hochwässer eine Verbesserung der Hochwasserschutzmaßnahmen geboten erscheinen lassen.

Zur Verbesserung des Hochwasserschutzes ist man beispielsweise in Köln dazu übergegangen, die Innenstadt bei drohendem Hochwasser mit mobilen Hochwasserschutzwänden zur Wasserfront hin abzusichern. Diese Maßnahme hatte sich in der Vergangenheit durchaus bewährt. Es hat sich aber gezeigt, daß diese mobilen Schutzwände den immer häufiger und höher auftretenden Hochwässern nicht mehr gerecht werden. Insbesondere ist ihre Höhe und Belastbarkeit nicht für die mit immer höheren Scheitelwellen auftretenden Hochwässer jüngeren Datums ausgelegt. Da die zunehmende Versiegelung der Landschaft und Begradigung der Flußläufe aber weiterhin die Gefahr von schweren Hochwässern erhöht, besteht Bedarf an stärker belastbaren und höher aufrichtbaren Hochwasserschutzwänden.

Hinzu kommt, daß im Rahmen der dichter werdenden Besiedlung auch der Flußufer und der Innenstadtbereiche die Höhe der hochwasserbedingten Schäden außerordentlich zunimmt. Die in früheren Zeiten weniger häufig und weniger stark auflaufenden Hochwässer konnten noch toleriert werden, solange der durch das Hochwasser angerichtete Schaden ein gewisses Verhältnis zu den Kosten von Schutzmaßnahmen nicht überstieg. Die inzwischen gestiegenen Scheitelpunkte von Hochwasserwellen und dichteren Besiedlungen bedingen aber immer größere Schäden, die durch steigende Tendenz zu Hochwässern weiter verstärkt werden. Insbesondere besteht nunmehr ein Bedarf an einem zuverlässigen Schutzsystem, mit dem derartige Schäden abgewandt werden.

Im Rahmen des Schutzes von Wohn- und Industrielagen ist es ferner wünschenwert, über ein Schutzwandsystem zu verfügen, mit dem im Bedarfsfalle schnell eine Auffangmöglichkeit oder eine Ableitung geschaffen werden kann.

Aufgabe der Erfindung ist daher die Bereitstellung eines Hochwasserschutzsystems, mit dem private oder öffentliche Einrichtungen vorzugsweise im Kernbereich hochwassergefährdeter Städte zuverlässig geschützt werden können, ohne aber bei Normalwasser den Wasserzugang zu behindern. Das Hochwasserschutzsystem sollte im Ruhezustand als Verkehrsfläche nutzbar sein und bei der Anlage mit einem Minimum an Erdbewegungen auskommen und insbesondere an bestehende Versorgungsleitungen anpaßbar sein, ohne daß die Funktionsfähigkeit eingeschränkt wird.

Diese Aufgabe wird mit einem Hochwasserschutzsystem der eingangs genannten Art gelöst, das eine Aufnahmekammer, die in eine wasserseitige flutbare Schwimmkammer und eine schutzzonenseitige Einschwenkkammer unterteilt ist, ein oder mehrere in die Aufnahmekammer einschwenkbare Wandelemente, die aus einem in die Schwimmkammer einschwenkbaren Pontonteil und einem in die Einschwenkkammer einsenkbaren Kontergewichtsteil besteht, und Stützelemente, an denen das oder die Wandelemente schwenkbar gelagert sind und deren Kopf sich im Bereich des Übergangs der Schwimmkammer in die Einschwenkkammer befindet, aufweist.

Das erfindungsgemäß Hochwasserschutzsystem besteht demnach aus insgesamt drei zusammenwirkenden Elementen, einer Aufnahmekammer, die bei längeren Konstruktionen zweckmäßigerweise als Kanal ausgebildet ist, einem oder mehreren Wandelementen, die im Ruhezustand in die Aufnahmekammer eingeschwenkt sind und somit eine nutzbare Oberfläche bilden, sowie Stützelemente, vorzugsweise in Form einer Spundwand, an denen das oder die Wandelemente schwenkbar gelagert sind.

Die Aufnahmekammer bzw. der Aufnahmekanal gliedert sich erfindungsgemäß in zwei Teile, eine flutbare Schwimmkammer, die den wasserseitigen Teil darstellt, und eine schutzzonenseitige Einschwenkkammer, die in aller Regel vor der Flutung geschützt ist, aber im Einsatzfall als Auffangbecken für eingedrungenes Wasser dienen kann, aus dem dieses dann abgepumpt wird.

Die Stützelemente bzw. Spundwand, an denen die Wandelemente schwenkbar gelagert sind, stabilisieren das erfindungsgemäße Hochwasserschutzsystem gegen den Druck des anstehenden Hochwassers. Sind die Stützelemente als Spundwand ausgeführt, ergibt sich gleichzeitig ein Schutz gegen durch das Erdreich eindringendes Wasser. Die Stützelemente bzw. Spundwand befinden sich mit dem größten Teil ihrer Länge von gegebenenfalls mehreren Metern im Erdreich und ragen nur mit ihrem Kopf heraus; der Kopf befindet sich im Bereich des Übergangs der Schwimmkammer zur Einschwenkkammer. Sind die Stützelemente als Spundwand ausgebildet, bilden die kopfseitigen Seitenflächen gleichzeitig die wasserseitige Wand der Einschwenkkammer, gegen die sich die aufgerichteten Stützwände mit ihrem Kontergewichtsteil abstützen. Am Kopf einer solchen Spundwand befinden sich außerdem die Drehgelenke, über die das oder die Wandelemente schwenkbar gelagert sind.

Das oder die Wandelemente, die die eigentliche Schutzwand bilden, bestehen aus zwei Teilen, einem Pontonteil, der schwimmfähig ausgelegt und wasserseitig angeordnet ist und den größeren Teil des Wandelements ausmacht, sowie einem Kontergewicht bzw. Kontergewichtsteil, das das schutzzonenseitige Ende des Wandelementes bildet und als Kontergewicht für das Pontonteil dient. Im Ruhezustand befindet sich ein jedes Wandelement mit seinem Pontonteil im Schwimmkammerbereich der Aufnahmekammer bzw. des Kanals, so daß die Rückseite des Wandelements mit der umgebenden Oberfläche abschließt. Der Kontergewichtsteil befindet sich in der Einschwenkkammer dergestalt, daß diese im Ruhezustand nach oben hin abgeschlossen wird. Die Lagerung der Wandelemente an den Stützelementen befindet sich im Übergangsbereich vom Pontonteil zum Kontergewichtsteil.

Wird im Falle eines Hochwassers der Schwimmkammerbereich der Aufnahmekammer bzw. des Kanals geflutet, so gewinnen die darin gelagerten Wandelemente im Pontonbereich einen solchen Auftrieb, der, gestützt von der Last des Kontergewichts, die Wandelemente aufrichtet, wobei sich im aufgerichteten Zustand der Kontergewichtsteil gegen die wasserseitige Wand der Einschwenkkammer bzw. die dort frei verlaufende Fläche der Spundwand abstützt.

Das erfindungsgemäße Hochwasserschutzsystem kann aus nur einem Wandelement bestehen, um beispielsweise eine Unterführung, Zufahrt oder einen Durchlauf abzudichten, ist aber besonders zweckmäßig einsetzbar mit einer Vielzahl von nebeneinander angeordneten Wandelementen, wobei die Aufnahmekammer als Aufnahmekanal ausgebildet ist. In diesem Fall ist es auch zweckmäßig, die Stützelemente als Spundwand auszubilden, deren Kopfteil die wasserseitige Begrenzung der Einschwenkkammer bildet. Je nach Untergrund und Anforderungen kann aber auch die Anordnung einzelner Stützelemente ausreichend sein. Solche Stützelemente können beispielsweise in den Boden getriebene Stahl- oder Betonelemente sein; als Stützelemente kommen aber auch im Bereich der Trennung von Schwimmkammer und Einschwenkkammer vorgesehene Betonschwellen oder eine dort angeordnete Stufe in Frage, sofern die Betonkonstruktion geeignet ist, den Wasserdruck des anstehenden Hochwassers aufzufangen.

Die einzelnen Wandelemente sind mit den Stützelementen bzw. der Spundwand verbunden. Die Anordnung des Drehgelenks an der schutzzonenseitigen Kante des Kopfes der Stützelemente oder der Spundwand erlaubt es, daß bei Auffahren der Schutzwand das Gegengewicht in die Einschwenkkammer eintaucht und sich gegen die wasserseitige Wand der Einschwenkkammer bzw. den dort freiliegenden Teil der Spundwand abstützt.

Das Drehgelenk ist zweckmäßigerweise auf eine dem Fachmann bekannte Art dichtend ausgebildet. Es ist aber auch ohne weiteres möglich, im Bereich des Kontergewichts eine Dichtlippe vorzusehen, die zwischen Kontergewicht und Spundwand bzw. wasserseitiger Wand der Einschwenkkammer wirkt.

Vorzugsweise ist im Bereich der wasserseitigen Wand der Einschwenkkammer oder an der Spundwand, dort wo das Kontergewichtsteil der Schutzwand anschlägt, ein Widerlager zur Abstützung der Wandelemente vorgesehen. Ein solches Widerlager kann einstellbar ausgebildet sein, so daß der Schutzwand in aufgefahrenem Zustand eine wasserseitige Neigung verliehen werden kann, die der Stabilisierung der Konstruktion dient.

Um die Schutzwand vor unerwünschtem Auffahren bei starken Regengüssen oder nicht Gefahr bringenden Hochwässern zu sichern, ist es zweckmäßig, eine Verriegelung der einzelnen Wandelemente vorzusehen, die diese vor dem Ausschwenken schützt. Zur Stabilisierung der Ruheposition der Schutzwand ist es weiterhin zweckmäßig, ein Auflager im Bereich der Sohle der Schwimmkammer vorzusehen.

Im Falle eines drohenden Hochwassers kann es erwünscht sein, die Schutzwand vorzeitig anzufahren. Desgleichen ist es notwendig, sie hin und wieder auf ihre Funktionsfähigkeit zu überprüfen. Es ist deshalb zweckmäßig, im Bereich der Schwimmkammer einen Wasserzulauf vorzusehen, der das Fluten der Schwimmkammer über Pumpen erlaubt. Bei ablaufendem Hochwasser kann über solche Pumpen auch das Leerlaufen der Schwimmkammer beschleunigt werden.

Zur Verbindung der einzelnen Wandelemente eines Systems zu einer Hochwasserschutzwand kann die Anordnung von seitlichen Dichtelementen notwendig sein, wenn die Paßgenauigkeit nicht ausreicht, eine hinreichende Dichtigkeit zu gewährleisten. Hierzu können übliche Dichtungen eingesetzt werden, beispielsweise in Form von Gummiwülsten oder Gummilippen. Eine weitere Möglichkeit besteht in der Anordnung seitlich vorstehender Flansche, die mit auf dem benachbarten Wandelement angeordneten Gummidichtungen zusammenwirken. In diesem Fall ist es aber erforderlich, daß sich die Wandelemente in definierter Reihenfolge aufrichten, daß das Anschlagen jedes weiteren Wandelements an den Flansch oder Anschlag des vorangehenden gewährleistet ist. Hierzu können die Kontergewichte der einzelnen Wandelemente so ausgelegt sein, daß sie sich im Falle der Flutung der Schwimmkammer in vorgegebener Reihenfolge mit dem Anstieg des Wassers aufrichten. Dies kann beispielsweise so geschehen, daß jedes zweite der Wandelemente mit seitlichen Anschlägen bzw. Flanschen ausgestattet ist, und sich diese Wandelemente zuerst aufrichten, und die verbliebenen Wandelemente im Anschlagsbereich der Flansche mit Dichtungen versehen sind und sich nachfolgend aufrichten.

Das erfindungsgemäße Hochwasserschutzsystem wird durch die beiliegenden Abbildungen näher beschrieben.

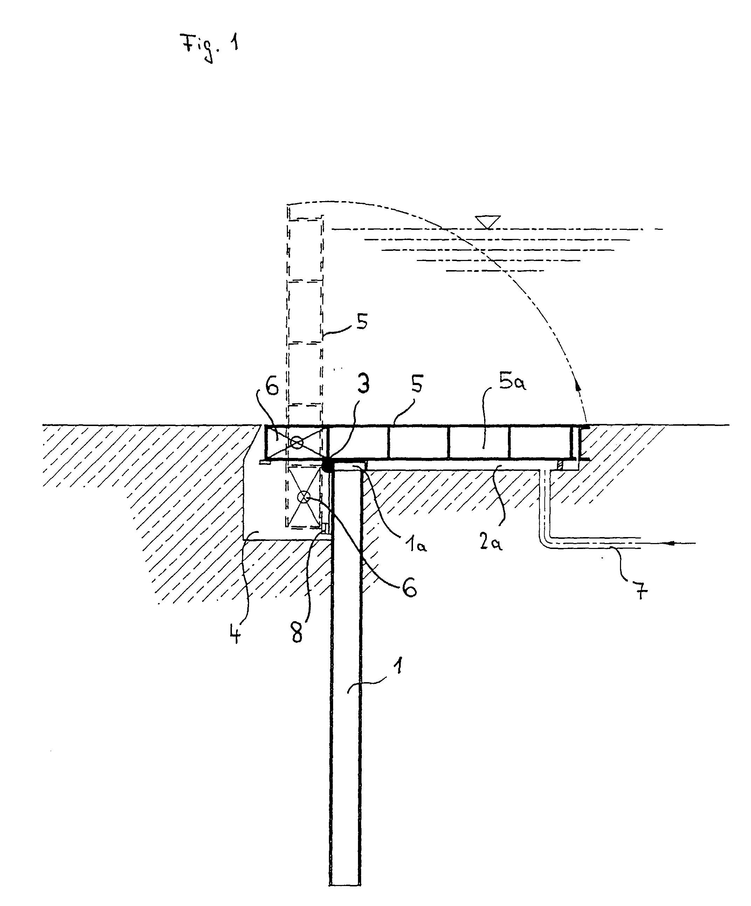

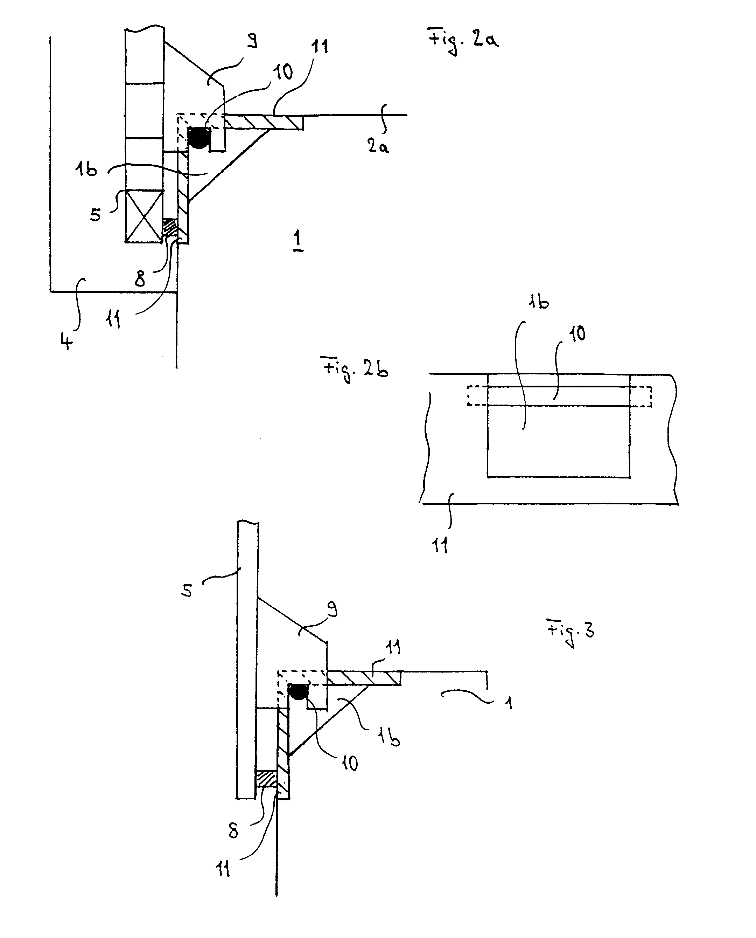

Im zu schützenden Bereich befindet sich gemäß Fig. 1 eine Spundwand bzw. ein Stahlbetonelement 1, die das mit ihrem Kopf la in einem Kanal endet, der sich in zwei Abschnitte gliedert, eine Schwimmkammer 2a und eine Einschwenkkammer 4. Der Kopf la der Spundwand bzw. Stahlbetonelement 1 definiert die Trennlinie zwischen Schwimmkammer und Einschwenkkammer.

Am Kopf la der Spundwand befindet sich ein Drehgelenk 3, an dem die eigentliche Schutzwand 5 drehbar gelagert ist. Kombiniert mit dem Drehgelenk 3 ist ein Dichtungssystem, das die Einschwenkkammer 4 und die hinter der Schutzwand befindliche Schutzzone vor eindringendem Wasser schützt.

Die Schutzwand 5 ist alleine über das Gelenk 3 bewegbar und an der Spundwand bzw. dem Stahlbetonelement befestigt. Sie ist im oberen Bereich 5a als Pontonkörper ausgeführt, der im Ruhezustand über der Schwimmkammer 2a des Kanals liegt. Der untere Teil der Schutzwand 5 dient als Kontergewicht 6 und dient im Ruhezustand der Einschwenkkammer 4 als Abdeckung. Die Schutzwand 5 kann beispielsweise auf Verkehrslasten ausgelegt und als Verkehrsfläche ausgebildet werden.

Der Teil der Schutzwand 5, der sich über der Einschwenkkammer 4 befindet, ist als Kontergewicht 6 ausgeführt. Dies unterstützt die Aufrichtung der Schutzwand in die vertikale Position bei Flutung des Kanals im Fall von Hochwasser über den Wasserzulauf 7.

Das Drehgelenklager 3 ist als Scharnier über die Gesamtlänge oder Abschnitte der Schutzwand ausgebildet. In diesem Scharniergelenk ist eine an und für sich bekannte Dichtung eingebaut, bzw. ist eine Dichtleiste an Kopf (1a) angebaut, die hier aber nicht näher beschrieben ist.

Die Schutzwand 5 stützt sich in aufgerichteter Stellung gegen das Widerlager 8 ab, welches einstellbar ausgeführt ist, um der Schutzwand eine Neigung zur Wasserseite hin zu geben.

Zweckmäßigerweise besteht die Schutzwand 5 aus mehreren Elementen, die beispielsweise an den Stirnflächen gegeneinander abgedichtet sind.

Am Anfang und Ende der Gesamtschutzwand ist ein hier nicht näher beschriebenes Dichtelement an der angrenzenden Mauer-, Gelände- oder Deichkonstruktion vorgesehen, welches die Stirnfläche des dort sich aufrichtenden Elements abdichtet.

Die einzelnen Wandelemente können durch Trimmung des Kontergewichts so einjustiert werden, daß sie sich in einer vorgegebenen Reihenfolge anheben bzw. senken, um das Dichtsystem zwischen den Wänden zur Funktion zu bringen. Bei Ablauf der Flut senkt sich entsprechend der Höhe des Wasserstandes die Schutzwand selbsttätig in ihre Ruheposition in der Horizontalen ab.

Die Abbildung gibt die Hochwasserschutzwand sowohl in der Ruheposition als auch in aufgerichteter Stellung wieder, wobei die dreieckige Markierung die Wasserseite und den Hochwasserstand andeutet.

Gemäß einer weiteren Ausführungsform, die in Fig. 2a und 2b dargestellt ist, ist das Stützelement 1 als Betonbalken oder -schwelle 1 ausgebildet, die in Richtung der Hochwasserschutzwand verläuft. In diesen Betonbalken 1 sind in Abständen, die der Länge eines Schutzelements entsprechen, Taschen 1b eingelassen, in denen frei ein Rundbolzen 10 parallel zur Kante der Schwelle 1 verläuft. Jede Tasche 1b ist zur Schaffung einer gleichmäßigen Oberfläche von einem Winkelelement 11 eingefaßt, daß die Tasche und damit den in der Tasche verlaufenden Bolzen 10 frei zugänglich läßt. Die Taschen sind zweckmäßigerweise als partielle, im wesentlichen gleichschenklige Kantenausschnitte ausgebildet.

Ein jedes Wandelement weist an seiner Unterseite ein rechtwinklig abstehendes gabelförmiges Haltelement 9 auf, dessen Gabel so dimensioniert ist, daß der Bolzen 10 darin aufgenommen werden kann und das Schutzelement um den Bolzen bewegt werden kann. Im aufgerichteten Zustand, wie in Fig. 2 a und b gezeigt, stößt dann das Wandelement 5 mit seiner Dichtung 8 an den unteren Rand des Winkelelements 11, geschwenkt um den Bolzen 10. Das auf der Seite des Halteelements 9 anstehende Wasser verursacht einen hinreichend großen Preßdruck, um die Dichtung 8 zur Wirkung zu bringen.

Insgesamt hat die Betonschwelle 1 eine Winkel-Kanteneinfassung, die sich entlang der Oberkante der auf dem Wasser abgewandten Seite erstreckt und regelmäßige Taschen 1b freiläßt, in die die Wandelemente 5 eingeklinkt werden (Fig. 2b). Die glatte Metalloberfläche der Winkeleinfassung 11 dient gleichzeitig als Wiederlager für die Dichtung 8. Dadurch ist sichergestellt, daß die Dichtigkeit herabsetzende Verschmutzungen leicht beseitigt werden können.

Fig. 3 zeigt eine Variante der Ausführungsform gemäß Fig. 2 a und b, bei der die Schwimmkammer 2a fehlt. Die Stützelemente 1 werden durch eine durchlaufende Stützmauer 1 ersetzt, an der die Wandelemente 5 mittels der Halterung 9 an den in Fig. 2 dargestellten Bolzen 10 eingeklinkt und gehaltert sind. Die Mauer weist die in Fig. 2 näher beschriebenen Taschen 1b auf, in der die Bolzen 10 allseits zugänglich gelagert sind. Auch hier werden die Taschen 1b durch Winkelelemente 11 eingefaßt, die sich längs der wasserabgewandten Kante auf der Maueroberseite und entlang der Seitenwand erstrecken.

Gemäß einer erprobten Ausführungsform haben die Einzelelemente beispielsweise eine gewünschte Bauhöhe von 0,6 m über den Kopf der Betonmauer hinaus. Die Konstruktionshöhe eines Elements beträgt beispielsweise ca. 0,8 m. Die Breite der Einzelelemente kann, je nach Einsatzzweck, zwischen 0,5 m und 5 m liegen.

Zweckmäßigerweise sind die Wandelemente aus Edelstahl gefertigt, ebenso die Winkelelemente 11 und die Bolzen 10. Eine Verstärkung und Verankerung in der Betonmauer stellt sicher, daß die durch das anstehende Wasser zu erwartenden Kräfte keine schädlichen Verformungen aufkommen lassen und die Funktion der eingesetzten Dichtungen, die gegen das untere Ende der Winkelelemente 11 wirken, gewährleistet ist.

Die Elemente werden in die Bolzen im Bereich der Taschen eingeklinkt. Untereinander werden die Wandelemente durch Hebelverschlüsse verriegelt.

Die Dichtungen liegen in Profilschienen und sind aus einem erprobten Werkstoff, beispielsweise EPDM. Durch das Hochwasser wird das jeweilige Einzelelement um den Einhängepunkt als Drehpunkt am Mauerkopf über die horizontale Dichtung auf die Stahlfläche des Winkelelements 11 gedrückt. Je höher der Wasserstand, um so höher der Dichtungsanpressdruck.

Die vertikalen Dichtungen zwischen Wandelementen werden in gleicher Weise angepreßt und sind vom gleichem Aufbau und Material. Der T-Stoß, an dem die Dichtungen aufeinanderstoßen, wird besonders sorgfältig in Einzelelementen montiert und durch die Hebelverschlüsse zusätzlich eine horizontale Anpreßkraft von Element zu Element aufgebracht.

## Patentansprüche

1. Hochwasserschutzsystem mit einem oder mehreren versenkbaren Wandelementen und Dichtelementen zwischen Boden- und Wandelementen sowie zwischen benachbarten Wandelementen, gekennzeichnet durch eine Aufnahmekammer, die in eine flutbare Schwimmkammer (2a) und eine Einschwenkkammer (4) unterteilt ist, ein oder mehrere in die Aufnahmekammer einschwenkbare Wandelemente (5), die aus einem in die Schwimmkammer (2a) einschwenkbaren Pontonteil (5a) und einem in die Einschwenkkammer (4) einsenkbaren Kontergewichtsteil (6) besteht sowie Stützelemente (1), an denen das oder die Wandelemente (5) schwenkbar gelagert sind und deren Kopf (1a) sich im Bereich des Übergangs der Schwimmkammer (2a) in die Einschwenkkammer (4) befindet.

2. Hochwasserschutzsystem nach Anspruch 1, dadurch gekennzeichnet, daß die Aufnahmekammer als Kanal ausgebildet ist und eine Vielzahl von aneinandergrenzenden Wandelementen (5) vorgesehen ist.

3. Hochwasserschutzsystem nach Anspruch 2, dadurch gekennzeichnet, daß die Stützelemente (1) als Spundwand oder Stahlbetonelement ausgebildet sind, deren bzw. dessen Köpfteil (1a) die wasserseitige Begrenzung der Einschwenkkammer (4) des Kanals bildet.

4. Hochwasserschutzsystem nach Anspruch 3, dadurch gekennzeichnet, daß die Wandelemente (5) über ein Drehgelenk (3) mit dem Kopf (1a) der Spundwand oder des Stahlbetonelements (1) verbunden sind.

5. Hochwasserschutzsystem nach Anspruch 4, dadurch gekennzeichnet, daß das Drehgelenk (3) dichtend ausgebildet ist.

6. Hochwaserschutzsystem nach Anspruch 4 oder 5, dadurch gekennzeichnet, daß zur Abstützung der aufgerichteten Wandelemente (5) am Kopfteil (1a) der Spundwand oder des Stahlbetonelements (1) Widerlager (8) zur Abstützung der Wandelemente (5) vorgesehen sind.

7. Hochwasserschutzsystem nach Anspruch 6, dadurch gekennzeichnet, daß die Widerlager (8) einstellbar ausgelegt sind, so daß die Wandelemente (5) in abgestütztem Zustand eine wasserseitige Neigung erhalten.

8. Hochwasserschutzsystem nach einem der vorstehenden Ansprüche, dadurch gekennzeichnet, daß Auflager (9) und/oder Verriegelungen zur Festlegung der Wandelemente (5) in ihrer Ruheposition vorgesehen sind.

9. Hochwasserschutzsystem nach einem der vorstehenden Ansprüche, gekennzeichnet durch einen Wasserzulauf (7) in die Schwimmkammer (2a).

10. Hochwasserschutzsystem nach einem der vorstehenden Ansprüche, dadurch gekennzeichnet, daß die Kontergewichtsteile (4) der Wandelemente (5) ein unterschiedliches Gewicht aufweisen, dergestalt, daß sich die Wandelemente (5) bei Flutung der Schwimmkammer (2a) in einer vorgegebenen Reihenfolge aufrichten.

## Claims

1. A high water protection system comprising one or more lowerable wall elements and sealing elements between bottom and wall elements and between adjacent wall elements, characterised by a receiving chamber which is subdivided into a floodable float chamber (2a) and a pivotal-retraction chamber (4), one or more wall elements (5) which can be pivoted into the receiving chamber and which comprises a pontoon portion (5a) which can be pivoted into the float chamber (2a) and a counterweight portion (6) which can be lowered into the pivotal-retraction chamber (4), and support elements (1) to which the wall element or elements (5) are pivotably mounted and whose head (1a) is disposed in the region of the transition of the float chamber (2a) into the pivotal-retraction chamber (4).

2. A high water protection system according to claim 1 characterised in that the receiving chamber is in the form of a passage and there is provided a plurality of mutually adjoining wall elements (5).

3. A high water protection system according to claim 2 characterised in that the support elements (1) are in the form of a sheet piling wall or a reinforced concrete element whose head portion (1a) forms the water-side boundary of the pivotal-retraction chamber (4) of the passage.

4. A high water protection system according to claim 3 characterised in that the wall elements (5) are connected by way of a hinge joint (3) to the head (1a) of the sheet piling wall or the reinforced concrete element (1).

5. A high water protection system according to claim 4 characterised in that the hinge joint (3) is of a sealing configuration.

6. A high water protection system according to claim 4 or claim 5 characterised in that to support the erected wall elements (5) on the head portion (1a) of the sheet piling wall or the reinforced concrete element (1) there are provided support means (8) for supporting the wall elements (5).

7. A high water protection system according to claim 6 characterised in that the support means (8) are adapted to be adjustable so that the wall elements (5) in the supported condition involve an inclination at the water side.

8. A high water protection system according to one of the preceding claims characterised in that there are provided bearing members (9) and/or locking means for fixing the wall elements (5) in their rest position.

9. A high water protection system according to one of the preceding claims characterised by a water feed flow means (7) leading into the float' chamber (2a).

10. A high water protection system according to one of the preceding claims characterised in that the counterweight portions (4) of the wall elements (5) are of a different weight in such a way that the wall elements (5) are erected in a predetermined sequence upon flooding of the float chamber (2a).

## Revendications

1. Système de protection contre des inondations avec un ou plusieurs éléments de paroi aptes à être immergés et des éléments d'étanchéité entre des éléments de fond et de paroi ainsi qu'entre des éléments de paroi avoisinants, caractérisé par une chambre de réception qui est divisée en une chambre flottante pouvant être remplie d'eau (2a) et une chambre pivotante (4), un ou plusieurs éléments de paroi (5) pouvant être amenés à pivoter dans la chambre de réception constitués d'une partie de ponton (5a) apte à être amenée par pivotement dans la chambre flottante (2a) et d'une partie de contre-poids (6) pouvant être abaissée dans la chambre de pivotement (4) ainsi que des éléments de support (1) sur lesquels le ou les éléments de paroi (5) sont logés d'une manière pivotante et dont la tête (1a) se trouve au voisinage de la transition de la chambre flottante (2a) dans la chambre de pivotement (4).

2. Système de protection contre des inondations selon la revendication 1, caractérisé en ce que la chambre de réception est réalisée en forme de canal et qu'il est prévu un grand nombre d'éléments de paroi avoisinants (5).

3. Système de protection contre des inondations selon la revendication 2, caractérisé en ce que les éléments de support (1) sont réalisés sous forme de mur de palplanches ou d'éléments en béton armé dont la partie de tête (1a) forme la délimitation côté eau de la chambre de pivotement (4) du canal.

4. Système de protection contre des inondations selon la revendication 3, caractérisé en ce que les éléments de paroi (5) sont reliés par une articulation tournante (3) à la tête (1a) du mur de palplanches (1) ou de l'élément en béton armé.

5. Système de protection contre des inondations selon la revendication 4, caractérisé en ce que l'articulation tournante (3) est réalisée d'une manière étanche.

6. Système de protection contre des inondations selon la revendication 4 ou 5, caractérisé en ce que sont prévus pour le support des éléments de paroi érigés (5) à la partie de tête (1a) du mur de palplanches ou de l'élément en béton armé (1) des butées (8) pour supporter les éléments de paroi (5).

7. Système de protection contre des inondations selon la revendication 6, caractérisé en ce que les butées (8) sont conçues d'une manière réglable de telle sorte que les éléments de paroi (5), à l'état supporté, soient inclinés vers le côté de l'eau.

8. Système de protection contre des inondations selon l'une des revendications précédentes, caractérisé en ce que sont prévus des appuis (9) et/ou des verrouillages pour fixer les éléments de paroi (5) dans leur position de repos.

9. Système de protection contre des inondations selon l'une des revendications précédentes, caractérisé par une amenée d'eau (7) dans la chambre flottante (2a).

10. Système de protection contre des inondations selon l'une des revendications précédentes, caractérisé en ce que les parties de contre-poids (4) des éléments de paroi (5) ont un poids différent de telle sorte que les éléments de paroi (5), lors de la mise en eau de la chambre flottante (2a), se dressent selon un ordre prédéfini.
